# EUROPEAN PATENT SPECIFICATION

(11) **EP 3 681 030 B1**
(45) Date of publication and mention of the grant of the patent: **03.11.2021**
(21) Application number: 17924695.4
(22) Date of filing: 08.09.2017
(51) Int. Cl.: H02M 7/483, H02M 1/36, H02M 5/458

(54) **POWER CONVERSION DEVICE**
STROMUMWANDLUNGSVORRICHTUNG
DISPOSITIF DE CONVERSION DE PUISSANCE

(43) Date of publication of application: 15.07.2020
(73) Proprietor: Kabushiki Kaisha Toshiba, Minato-ku Tokyo 105-8001 (JP); Toshiba Energy Systems & Solutions Corporation, Kawasaki-shi, Kanagawa 212-0013 (JP)
(72) Inventor: SEKIGUCHI Kei, Tokyo 105-8001 (JP); KOYAMA Yushi, Tokyo 105-8001 (JP); ARAI Takuro, Tokyo 105-8001 (JP); KANEKO Takahiro, Tokyo 105-8001 (JP); SUZUKI Daichi, Tokyo 105-8001 (JP)
(74) Representative: AWA Sweden AB
(86) International application number: PCT/JP2017/032531
(87) International publication number: WO 2019/049325

(56) References cited:
- WO-A1-2016/170869
- WO-A1-2016/207976
- CN-A- 103 904 876
- JP-A- H0 962 388
- JP-A- H09 191 577
- JP-A- 2000 308 361
- JP-A- 2002 354 830

## Description

### [Technical Field]

Embodiments of the present invention relate to a power conversion device.

### [Background Art]

Wide area interconnection for connecting different power systems has been developed for the purpose of, for example, improving the reliability of the power systems or the efficiency of use of equipment. When power systems having different frequencies of AC currents are connected, a configuration in which power converters are respectively connected to different power systems and DC sides of these power converters are connected, for example, is adopted. A modular multilevel converter (MMC), for example, may be used as a power converter. The MMC is a power converter that includes an arm including a plurality of converters connected in series, and that can cope with a high voltage by summing voltages that can be output by the respective converters. An MMC connected to a power system on the power supply side converts AC power of the power system on the power supply side into DC power and supplies the DC power to an MMC on the side to which power is supplied. An MMC connected to a power system on the power receiving side converts DC power supplied from the MMC on the power supply side into AC power having a frequency of the AC system on the power receiving side. The same configuration can also be applied when frequencies of two power systems connected to each other are the same. Thus, in the wide area interconnection, it is possible to exchange power between different power systems via a plurality of MMCs.

The MMC is provided with a capacitors and an initial charging device for charging the capacitors. The initial charging device is intended to curb an inrush current to the capacitors, which is generated when the capacitors are charged. In a configuration of the related art (including a set of MMCs) that realizes, for example, DC power transmission, in which two power converters are separated, an initial charging device is provided for each MMC. However, since the initial charging device is relatively large, the installation area of the entire system may be large.

CN 103 904 876 A relates to a modularized multi-level converter smooth starting method with a synchronized grid connection function.

WO 2016/170869 A relates to a power conversion device in which a charging unit can be miniaturized.

### [Citation List]

### [Patent Literature]

[Patent Document 1] Japanese Unexamined Patent Application, First Publication No. 2016-208743

### [Summary of Invention]

### [Technical Problem]

An object of the present invention is to provide a power conversion device capable of curbing an installation area therefor.

### [Solution to Problem]

A power converter of the embodiment includes a first power converter, a second power converter, one initial charging device, and a charging assistance mechanism. The first power converter is connected to a first AC system and configured to convert AC to DC, and DC to AC. The second power converter is connected to a second AC system and configured to convert AC to DC, and DC to AC, a DC side of the second power converter being connected to the first power converter. The one initial charging device includes a resistor and a disconnector and is connected to at least one of the plurality of power converters. The charging assistance mechanism includes one or more bypass lines and an arrangement of switches, and is able to selectively connect one of the first AC system and the second AC system to the initial charging device.

### [Brief Description of the Drawings]

FIG. 1 is a configuration diagram showing an overall configuration of a power conversion device.
FIG. 2 is a diagram showing a circuit configuration of an MMC including a power conversion device.
FIG. 3 is a diagram showing a circuit configuration of a cell.
FIG. 4 is a configuration diagram showing an overall configuration of a power conversion device.
FIG. 5 is a configuration diagram showing an overall configuration of a power conversion device.
FIG. 6 is a configuration diagram showing an overall configuration of a power conversion device.
FIG. 7 is a configuration diagram showing an overall configuration of a power conversion device.
FIG. 8 is a diagram showing a circuit configuration of an MMC including the power conversion device.
FIG. 9 is a configuration diagram showing an overall configuration of a power conversion device.
FIG. 10 is a configuration diagram showing an overall configuration of a power conversion device.
FIG. 11 is a configuration diagram showing a connection portion between a neutral wire of a 3-winding transformer and an initial charging device.

### [Description of Embodiments]

Hereinafter, power conversion devices of embodiments will be described with reference to the drawings. In the following description, configurations having the same or similar functions are denoted by the same reference signs. Duplicate description of these configurations may be omitted.

### (First embodiment)

### [Overall configuration of power conversion device 1]

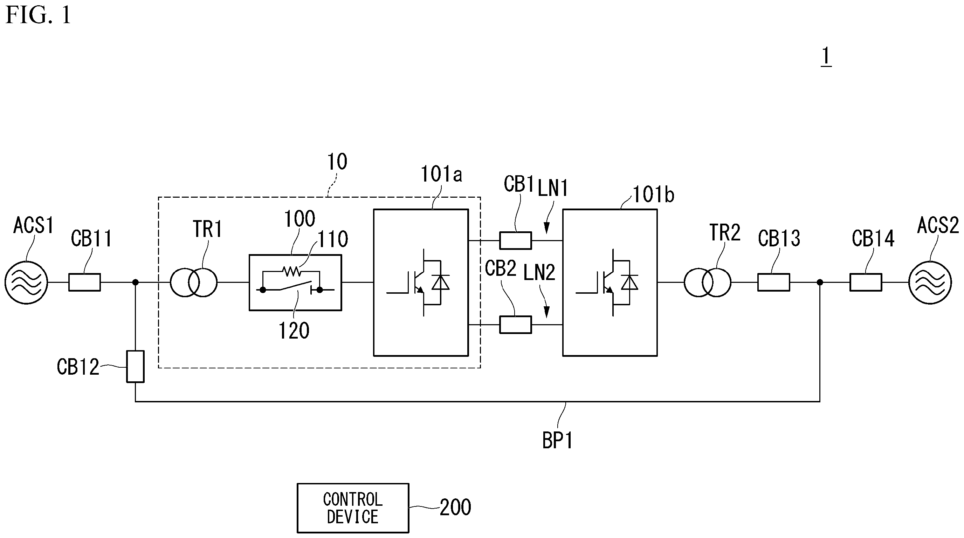

FIG. 1 is a configuration diagram showing an overall configuration of a power conversion device 1. The power conversion device 1 connects an AC system ACS1 to an AC system ACS2. For example, an AC frequency of the AC system ACS1 and an AC frequency of the AC system ACS2 are different from each other. The power conversion device 1 converts an alternating current supplied from one of the AC system ACS1 and the AC system ACS2 into a direct current, converts the direct current into an alternating current, and supplies the alternating current to the other of the AC system ACS1 and the AC system ACS2. This relationship does not have to be fixed, and may be reversed as necessary. In the following description, the power conversion device 1 converts the alternating current supplied from the AC system ACS1 into a direct current, converts the direct current after the conversion into an alternating current having the frequency of the AC system ACS2, and supplies the alternating current to the AC system ACS2.

### [Functional configuration of power conversion device 1]

As shown in FIG. 1, the power conversion device 1 includes, for example, an initial charging device 100, a first power converter 101a, a second power converter 101b, and switches CB1, CB2, CB11, CB12, CB13, and CB14, transformers TR1 and TR2, and a control device 200. The first power converter 101a and the second power converter 101b constitute a part or all of the MMC, for example.

The switch CB11, the transformer TR1, the initial charging device 100, and the first power converter 101a are connected in series in this order from the AC system ACS1.

The first power converter 101a and the second power converter 101b are connected in series by a DC link LN1 and a DC link LN2. The positive side DC link LN1 is provided with a switch CB1. The negative side DC link LN2 is provided with a switch CB2.

Further, the switch CB14, the switch CB13, the transformer TR2, and the second power converter 101b are connected in series from the AC system ACS2. The order of connection between the transformer TR2 and the switch CB13 may be reversed.

The first power converter 101a converts the alternating current supplied from the AC system ACS1 into a direct current, and outputs the direct current to the DC link LN1 and the DC link LN2. The second power converter 101b converts the direct current supplied from the first power converter 101a via the DC link LN1 and the DC link LN2 into an alternating current, and supplies the alternating current to the AC system ACS2.

The initial charging device 100 has a configuration in which a resistor 110 and a disconnector 120 are connected in parallel. The resistor 110 curbs, for example, an inrush current to capacitors of the first power converter 101a connected to the initial charging device 100. The disconnector 120 is switched between a disconnected state and a connected state by an operator who operates the power conversion device 1. The disconnector 120 enters the disconnected state at the time of start of initial charging. Thereby, the inrush current to the capacitors of the first power converter 101a is curbed. Further, the disconnector 120 is caused to enter the connected state by the operator when charge is stored in capacitors of the power conversion device to some extent. Since the disconnector 120 that has entered the connected state has a lower resistance than the resistor 110, the disconnector 120 becomes a main current path. The disconnector 120 may be switched between the disconnected state and the connected state under electronic control of the control device 200 to be described below.

A bypass line BP1 that connects a location between the switch CB11 and the initial charging device 100 to a location between the switch CB13 and the switch CB14 is provided. A switch CB12 is provided in the bypass line BP1. Here, a portion including a plurality of switches CB from the switches CB11 to CB14 and the bypass line BP1 is an example of a charging assistance mechanism.

The transformer TR mediates power while insulating a primary side from a secondary side. The transformer TR is, for example, a two-winding transformer.

The control device 200 controls each of the switch CB1, the switch CB2, and the switches CB11 to CB14, and sets these switches to any one of the disconnected state and the connected state. Further, the control device 200 controls the first power converter 101a and the second power converter 101b.

### [Initial charging of power conversion device 1]

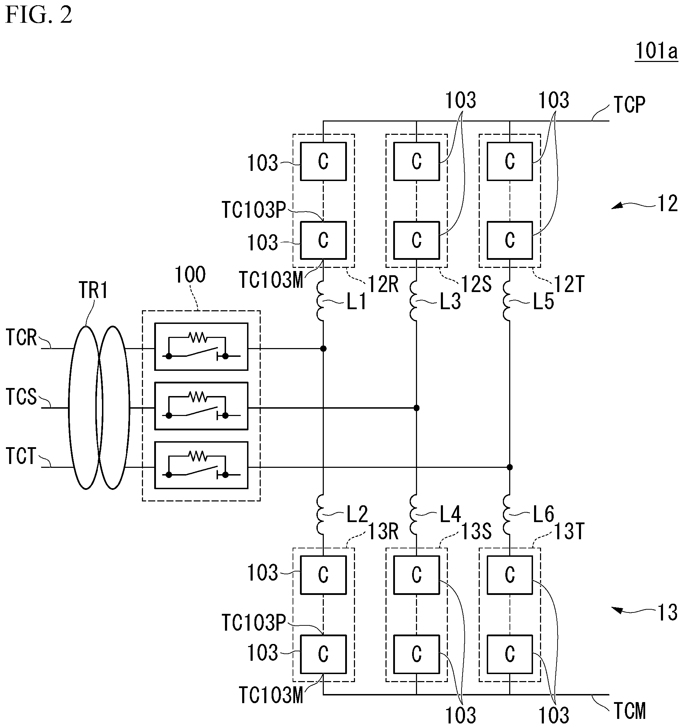

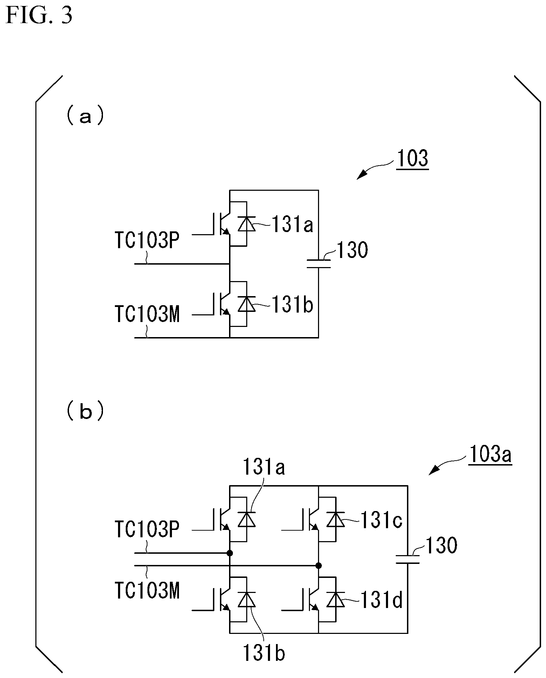

Next, initial charging of the power conversion device 1 will be described with reference to FIGS. 2 and 3. FIG. 2 is a diagram showing a circuit configuration of an MMC 10 including the power converter 101a.

As shown in FIG. 2, the first power converter 101a includes, for example, a positive side arm 12 and a negative side arm 13. In the positive side arm 12, a plurality of cells 103 are connected in series. In the negative side arm 13, a plurality of cells 103 are connected in series.

The positive side arm 12 includes a positive side arm 12R, a positive side arm 12S, and a positive side arm 12T. Further, the negative side arm 13 includes a negative side arm 13R, a negative side arm 13S, and a negative side arm 13T. The positive side arm 12R, the positive side arm 12S, the positive side arm 12T, the negative side arm 13R, the negative side arm 13S, and the negative side arm 13T each include at least two cells 103.

In the positive side arm 12 and the negative side arm 13, voltages of the respective cells 103 are summed and an output voltage is determined. The output voltages of the positive side arm 12 and the negative side arm 13 include both an AC component and a DC component. An AC voltage is generated and output at a point at which the positive and negative side arms are connected to each other, and a DC voltage is generated and output between a terminal TCP and a terminal TCM by the positive and negative arms in cooperation.

A 3-phase AC current is supplied from the AC system to the transformer TR1. The transformer TR1 includes sets of a secondary winding and a primary winding for three phases. The three phases are, for example, an AC R phase, an AC S phase, and an AC T phase. An AC R phase, an AC S phase, and an AC T phase are respectively supplied to the secondary winding side of the transformer TR1.

A terminal corresponding to the R-phase on the secondary winding side of the transformer TR1 supplies R-phase AC current to the positive side arm 12R via a filter reactor L1 and to the negative side arm 13R via a filter reactor L2. The positive side arm 12R and the negative side arm 13R convert the R-phase AC power into DC power.

A terminal corresponding to the AC S-phase on the secondary winding side of the transformer TR supplies S-phase AC current to the positive side arm 12S via a filter reactor L3 and to the negative side arm 13S via a filter reactor L4. The positive side arm 12S and the negative side arm 13S convert the S-phase AC power into DC power.

A terminal corresponding to the AC T-phase on the secondary winding side of the transformer TR supplies T-phase AC current to the positive side arm 12T via a filter reactor L5 and to the negative side arm 13T via a filter reactor L6. The positive side arm 12T and the negative side arm 13T convert the T-phase AC power into DC power.

The filter reactors L1 to L6 curb a short-circuit current that flows between the positive side arm and the negative side arm and between phases of a 3-phase alternating current.

FIG. 3 is a diagram showing a circuit configuration of the cell 103. Here, a configuration of the cell 103 of the embodiment is shown in FIG. 3(a). The cell 103 is a half bridge type cell. The cell 103a shown in FIG. 3(b) is a full bridge type cell. In the first embodiment, a half bridge type cell 103 is used. A full bridge type cell 103a may be used in a third embodiment to be described below.

The cell 103 includes, for example, a switching element 131a, a switching element 131b, and a capacitor 130. The cell 103 generates a desired voltage according to an ON or OFF operation of the switching element 131a and the switching element 131b using the capacitor 130 as a voltage source.

The switching element 131a and the switching element 131b are connected to each other in series to constitute a leg. The capacitor 130 is connected in parallel with this leg. The switching element 131a and the switching element 131b are self-turn-off type switching elements, such as, for example, a gate turn-off thyristor (GTO), an insulated gate bipolar transistor (IGBT), and/or an injection enhanced gate transistor (IEGT). Further, freewheeling diodes are connected in antiparallel to the switching elements 131a and 131b, respectively. The cell 103 outputs a voltage between a positive electrode and a negative electrode of the capacitor 130 when the switching element 131a is ON, and outputs a zero voltage when the switching element 131b is ON.

The positive side arm 12 and the negative side arm 13 described above generate a predetermined voltage such as a stepped AC voltage using the cell 103 as a unit converter. This stepped AC voltage is generated by timings of the switching operations of the switching elements 131a and the switching elements 131b being shifted.

The initial charging described above is to charge the capacitor 130 included in the cell 103 when the power conversion device 1 is activated. The first power converter 101a and the second power converter 101b according to the embodiment initially charge the capacitors 130 included in the first power converter 101a and the second power converter 101b with an AC current of any one of the AC system ACS1 and the AC system ACS2. When the initial charging starts, the disconnector 120 included in the initial charging device 100 enters a disconnected state. In this state, the initial charging device 100 supplies an AC current to each positive side arm and each negative side arm via the resistor 110.

When the capacitor 130 is charged to a predetermined voltage by the AC current, the disconnector 120 of the initial charging device 100 enters a connected state. Thereby, the initial charging device 100 acts as a resistor until the capacitor 130 is charged to the predetermined voltage, and curbs an inrush current to the capacitor 130.

### [Operation of power conversion device 1]

### [1. Operation of performing initial charging with AC current supplied from the AC system ACS2]

Referring back to FIG. 1, an operation of performing initial charging of the first power converter 101a with the AC current supplied from the AC system ACS2 will be described.

The switch CB1, the switch CB2, and the switches CB11 to CB14 before the initial charging is performed are caused to enter a disconnected state, for example.

(1-1) The control device 200 causes the switch CB1 and the switch CB2 to enter the connected state.

(1-2) The control device 200 causes the switch CB12 and the switch CB14 to enter a connected state. Thereby, the capacitor 130 included in the first power converter 101a is initially charged with an AC current supplied from the AC system ACS2.

(1-3) When the capacitor 130 included in the first power converter 101a is charged to a predetermined voltage, the operator causes the disconnector 120 of the initial charging device 100 to enter a connected state. In this case, a voltage of the capacitor 130 included in the first power converter 101a and the second power converter 101b is lower than a rated voltage of the capacitor 130. For example, the charging voltage of the capacitor 130 included in the first power converter 101a is about 70% of the rated voltage. Further, the voltage of the capacitor 130 of the first power converter 101ab is half (for example, about 35% of the rated voltage) of the charging voltage of the capacitor 130 included in the first power converter 101a because the cell 103 is a half bridge type cell in the first embodiment.

(1-4) The control device 200 starts switching of the switching element 131a and the switching element 131b included in the first power converter 101a. Thereby, the capacitor 130 included in the first power converter 101a is charged to a target value of a steady operation of the first power converter 101a with the AC current supplied from the AC system ACS2. For example, the capacitor 130 included in the first power converter 101a is charged to approximately the rated voltage.

(1-5) The control device 200 starts switching of the switching element 131a and the switching element 131b included in the second power converter 101b. Thereby, the capacitor 130 included in the second power converter 101b is charged to a target value of a steady operation with the AC current supplied from the first power converter 101a. For example, the capacitor 130 included in the second power converter 101b is initially charged to approximately the rated voltage.

(1-6) The control device 200 stops switching of the switching element 131a and the switching element 131b included in the first power converter 101a and the second power converter 101b.

(1-7) The control device 200 causes the switch CB12 to enter a disconnected state. In this case, since the switching of the first power converter 101a and the second power converter 101b is stopped, no current flows through the switch CB12. Since no current spark is generated unlike a case in which the switch CB12 is opened or closed in a state in which a current is flowing, it is possible to curb an influence of the current spark on the switch CB12.

A state in which no current flows through the switch CB12 described above includes a state in which a minute current that is usually equal to or less than several % of a rated value is flowing. It is not that a current does not completely flow due to supply of an excitation current flowing from an AC power supply to the transformer TR1 or power corresponding to an internal loss of an initially charged cell to the power converter.

This is because these minute currents are sufficiently lower than a rated current and there is substantially no influence on the embodiment.

(1-8) The control device 200 causes the switch CB11 and the switch CB13 to enter a connected state. In this case, since the switch CB12 is in a disconnected state, the AC system ACS1 and the AC system ACS2 are not short-circuited.

(1-9) The control device 200 restarts the switching of the switching element 131a and the switching element 131b respectively included in the first power converter 101a and the second power converter 101b.

(1-10) The power conversion device 1 starts a normal operation for exchanging power in an order from the AC system ACS1 to the first power converter 101a, the second power converter 101b, and the AC system ACS2.

### [2. Operation of performing initial charging with AC current supplied from the AC system ACS1]

The operation of performing the initial charging of the power conversion device 1 with the AC current supplied from the AC system ACS2 has been described. Next, an operation of performing initial charging of the power conversion device 1 with an AC current supplied from the AC system ACS1 will be described.

The switch CB1, the switch CB2, and the switches CB11 to CB14 before the initial charging is performed are in a disconnected state, for example.

(2-1) The control device 200 causes the switch CB1 and the switch CB2 to enter a connected state.

(2-2) The control device 200 causes the switch CB11 to enter the connected state. Thereby, the capacitor 130 included in the first power converter 101a is initially charged with the AC current supplied from the AC system ACS1.

(2-3) When the capacitor 130 included in the first power converter 101a is charged to a predetermined voltage, the operator causes the disconnector 120 of the initial charging device 100 to enter a connected state. The predetermined voltages of the first power converter 101a and the second power converter 101b are the same as when charging has been performed with an AC current supplied from the AC system ACS2 described above.

(2-4) The control device 200 starts switching of the switching element 131a and the switching element 131b included in the first power converter 101a. Thereby, the capacitor 130 included in the first power converter 101a is initially charged to a target value of a steady operation of the first power converter 101a by the AC current supplied from the AC system ACS1.

(2-5) The control device 200 starts switching of the switching element 131a and the switching element 131b included in the second power converter 101b. Thereby, the capacitor 130 included in the second power converter 101b is charged to a rated value that is a target value of a steady operation by the AC current supplied from the first power converter 101a.

(2-6) The control device 200 stops switching of the switching element 131a and the switching element 131b included in the first power converter 101a and the second power converter 101b.

(2-7) The control device 200 causes the switch CB13 and the switch CB14 to enter the connected state.

(2-8) The power conversion device 1 resumes switching of the switching element 131a and the switching element 131b included in the first power converter 101a and the second power converter 101b.

(2-9) The power conversion device 1 starts a normal operation for exchanging power in an order from the AC system ACS1 to the first power converter 101a, the second power converter 101b, and the AC system ACS2.

According to the power conversion device 1 of the first embodiment described above, it is possible to initially charge the plurality of power converters using one initial charging device 100 by including the charging assistance mechanism capable of selectively connecting one of the AC system ACS1 and the AC system ACS2 to the initial charging device 100. Thereby, the power conversion device 1 can reduce the number of initial charging devices 100 and curb an installation area of the power conversion device 1, as compared with the power conversion device in which one initial charging device is used for one power converter. Further, it is possible to manufacture the power conversion device 1 at low cost by reducing the number of initial charging devices 100. That is, the power conversion device 1 can curb an installation area and a manufacturing cost.

Further, according to the power conversion device 1 of the first embodiment, the switch CB is switched and the power conversion device 1 can be activated by power from a power supply of the other AC system (for example, the AC system ACS2) even when a power supply of one AC system (for example, the AC system ACS1) connected to the power conversion device 1 is lost.

The configuration in which the initial charging device 100 is provided on the secondary side of the transformer TR1 has been described above, but the present invention is not limited thereto. The initial charging device 100 may be provided on the primary side of the transformer TR1.

### (Second embodiment)

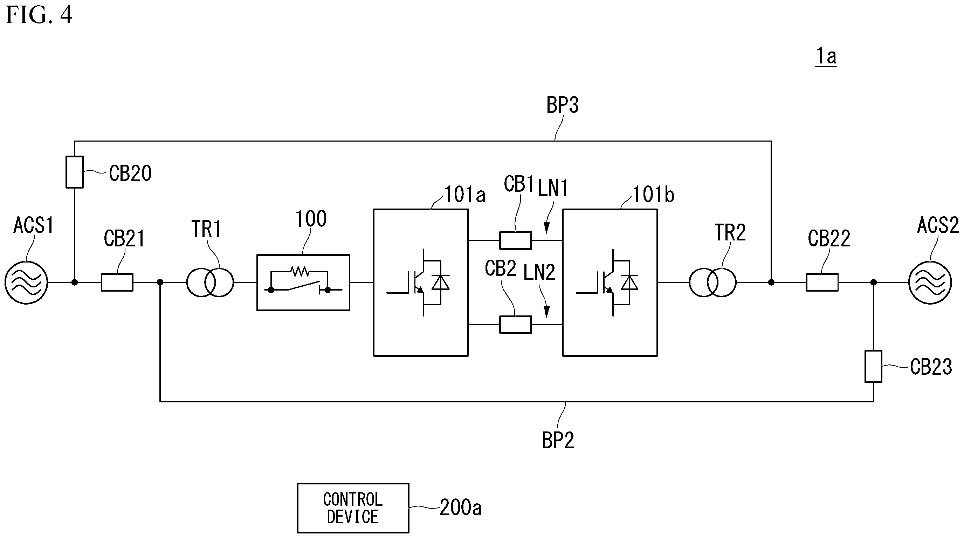

Next, a power conversion device of a second embodiment will be described with reference to FIG. 4. The second embodiment is different from the first embodiment in a connection aspect between each switch CB and the initial charging device 100. Parts that are the same as those in the first embodiment are denoted with the same reference signs, and a detailed description thereof will be omitted.

FIG. 4 is a configuration diagram showing an overall configuration of a power conversion device 1a. The power conversion device 1a of the second embodiment is different from the power conversion device 1 of the first embodiment described above in that a path of power at the time of a normal operation can be changed.

### [Overall configuration of power conversion device 1a]

As shown in FIG. 4, the power conversion device 1a includes, for example, a first power converter 101a, a second power converter 101b, a switch CB1, a switch CB2, a transformer TR1, a transformer TR2, an initial charging device 100, a switch CB20, a switch CB21, a switch CB22, a switch CB23, and a control device 200a.

The switch CB21, the transformer TR1, the initial charging device 100, and the first power converter 101a are connected in series in this order from an AC system ACS1. Further, the switch CB22, the transformer TR2, and the second power converter 101b are connected in series in this order from an AC system ACS2.

A bypass line BP2 is connected between the switch CB21 and the initial charging device 100 and between the AC system ACS2 and the switch CB22. The switch CB23 is provided in the bypass line BP2. Further, a bypass line BP3 is connected between the AC system ACS1 and the switch CB21 and between the second power converter 101b and the switch CB22. The switch CB20 is provided in the bypass line BP3. Here, the plurality of switches CB from the switch CB20 to the switch CB23, the bypass line BP2, and the bypass line BP3 are an example of a charging assistance mechanism.

### [State of switch CB of power conversion device 1a]

Initial charging of the first power converter 101a and the second power converter 101b can be performed from any one of the AC system ACS1 and the AC system ACS2, as in the first embodiment described above.

For example, the control device 200a can initially charge the first power converter 101a and the second power converter 101b with power of the AC system ACS2 by causing the switch CB23 to enter a connected state and the switches CB20 to CB22 to enter a disconnected state.

Further, the control device 200a can initially charge the first power converter 101a and the second power converter 101b using the AC system ACS1 by causing the switch CB21 to enter a connected state and the switches CB20, CB22, and CB23 to enter a disconnected state.

In a normal operation of the power conversion device 1a, a flow of power can be set in an order from the AC system ACS1 to the second power converter 101b, the first power converter 101a, and the AC system ACS2 by causing the switch CB21 and the switch CB22 to enter a disconnected state and the switch CB1, the switch CB2, the switch CB20, and the switch CB23 to enter a connected state.

Further, in a normal operation of the power conversion device 1a, a flow of power can be set in an order from the AC system ACS1 to the first power converter 101a, the second power converter 101b, and the AC system ACS2 by causing the switch CB20 and the switch CB23 to enter a disconnected state and the switch CB1, the switch CB2, the switch CB21, and the switch CB22 to enter a connected state.

According to the power conversion device 1a of the second embodiment described above, it is possible to curb an installation area of the power conversion device 1a, as in the first embodiment.

### (Third embodiment)

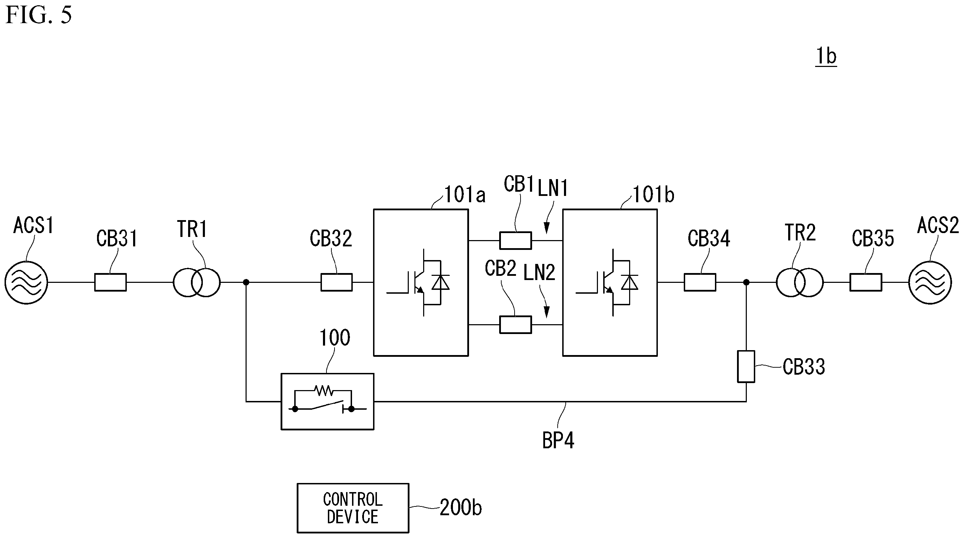

Next, a power conversion device according to a third embodiment will be described with reference to FIG. 5. The third embodiment is different from the first embodiment and the second embodiment in a connection aspect between each switch CB and the initial charging device 100. Parts that are the same as those in the first embodiment and the second embodiment are denoted with the same reference signs, and a detailed description thereof will be omitted.

FIG. 5 is a configuration diagram showing an overall configuration of a power conversion device 1b. The power conversion device 1b of the third embodiment differs the power conversion devices of the first embodiment and the second embodiment described above in that a connection between the initial charging device 100 and the first power converter 101a/the second power converter 101b can be changed. Further, in the above-described description, the configuration in which the first power converter 101a and the second power converter 101b use the half bridge type cell 103 has been described. However, a case in which the power conversion device 1b according to the third embodiment uses the full bridge type cell 103a will be described.

The full bridge type cell has a configuration shown in FIG. 3(b). As shown in FIG. 3(b), the cell 103a includes, for example, a switching element 131a, a switching element 131b, a switching element 131c, a switching element 131d, and a capacitor 130. The switching element 131c and the switching element 131d are connected to each other in series to form a leg. This leg is connected in parallel with the capacitor 130. Further, freewheeling diodes are connected in antiparallel to the switching element 131c and the switching element 131d, respectively.

A potential between the switching element 131a and the switching element 131b is output from a terminal TC103p. A potential between the switching element 131c and the switching element 131d is output from a terminal TC103M. The potential between the switching element 131a and the switching element 131b may be higher, lower, or equal to the potential between the switching element 131c and the switching element 131d.

The cell 103a generates a desired voltage according to an ON or OFF operation of the switching element 131a, the switching element 131b, the switching element 131c, and the switching element 131d using the capacitor 130 as a voltage source.

### [Overall configuration of power conversion device 1b]

As shown in FIG. 5, the power conversion device 1b includes, for example, a first power converter 101a, a second power converter 101b, a switch CB1, a switch CB2, the transformer TR1, a transformer TR2, the initial charging device 100, a switch CB31, a switch CB32, a switch CB33, a switch CB34, a switch CB35, and a control device 200b.

The switch CB31, the transformer TR1, the switch CB32, and the first power converter 101a are connected in series in this order from the AC system ACS1. Further, the switch CB35, the transformer TR2, the switch CB34, and the second power converter 101b are connected in series in this order from the AC system ACS2. An order of connection between the transformer TR1 and the switch CB31 may be reversed. Further, an order of connection between the transformer TR2 and the switch CB35 may be reversed.

A bypass line BP4 is connected between the switch CB31 and the switch CB32 and between the switch CB35 and the switch CB34. The switch CB33 and the initial charging device 100 are provided in the bypass line BP4. Here, the plurality of switches CB from the switch CB31 to the switch CB35 and the bypass line BP4 are an example of a charging assistance mechanism.

### [Switching of switch CB for initial charging of power conversion device 1b]

The switches CB31 to CB35 before initial charging is performed are all in a disconnected state, for example.

(4-1) The control device 200b causes the switch CB35, the switch CB33, and the switch CB32 to enter a connected state. An operator causes the disconnector 120 to enter a connected state after a predetermined time has elapsed. Thereby, the capacitor 130 included in the first power converter 101a is charged to a predetermined voltage with the AC current from the AC system ACS2. The predetermined voltage is lower than the rated voltage of the capacitor 130 as described above. Further, in a power converter using a full bridge type cell, a DC current does not flow to a DC side even when the capacitor 130 of the first power converter 101a is initially charged with an AC current. Therefore, even when the switches CB1 and CB2 have been in the connected state, the voltage of the capacitor 130 of the second power converter 101b does not increase.

(4-2) The control device 200b causes the switch CB35 and the switch CB32 to enter a disconnected state. Further, the operator causes the disconnector 120 to enter a disconnected state.

(4-3) The control device 200b causes the switch CB31 and the switch CB34 to enter the connected state. An operator causes the disconnector 120 to enter a connected state after a predetermined time has elapsed. Thereby, the capacitor 130 included in the second power converter 101b is charged to a predetermined voltage with the AC current from the AC system ACS1.

(4-4) The control device 200b causes the switch CB1 and the switch CB2 to enter a connected state.

(4-5) The control device 200b causes the switch CB33 to enter a disconnected state.

(4-6) The control device 200b causes the switch CB32 and the switch CB35 to enter a connected state.

(4-7) The control device 200b starts the switching of the first power converter 101a and charges a voltage of the capacitor 130 included in the first power converter 101a to a target value of the normal operation with power supplied from the AC system ACS1. Further, the control device 200b starts the switching of the second power converter 101b and charges a voltage of the capacitor 130 included in the second power converter 101b to the target value of the normal operation with power supplied from the AC system ACS2. In this case, a DC voltage at a terminal at which the power converter 101a and the power converter 101b are connected to each other is also simultaneously increased to the target value.

(4-8) The power conversion device 1b starts a normal operation for exchanging power in an order from the AC system ACS1 to the first power converter 101a, the second power converter 101b, and the AC system ACS2.

According to the power conversion device 1b of the third embodiment described above, it is possible to curb an installation area of the power conversion device 1, as in the first embodiment. Further, the power conversion device 1b can initially charge the first power converter 101a and the second power conversion 101b together from one AC system ACS without the DC current supplied from the other power converter because the initial charging device 100 is on the bypass line BP4, unlike the first embodiment and the second embodiment. As a result, even when the switch CB1 or CB2 on the DC side is in a disconnected state or when the power converter uses the full bridge type cell, it is possible to perform initial charging in a state in which the initial charging device 100 is shared.

Further, the power conversion device 1b includes the first power converter 101a and the second power converter 101b that use a full bridge type cell, such that a fault current such as a DC ground fault can be blocked.

Further, when the AC system for the AC current that is supplied to the initial charging device 100 is switched, the power conversion device 1b causes the switch CB31, the switch CB33, and the switch CB35 connected in series between the initial charging device 100 and the AC system to enter a disconnected state in which the switches are not electrically connected to each other. Thereby, it is possible to prevent a short-circuit between the AC system ACS1 and the AC system ACS2.

In the above-described description, the configuration in which the first power converter 101a and the second power converter 101b include the full bridge type cell 103a has been described. Here, the power conversion device 1b may switch a connection between the initial charging device 100 and the first power converter 101a/the second power converter 101b. For example, the half bridge type cell 103 described above may be used for the first power converter 101a and the second power converter 101b.

Here, in a case in which the first power converter 101a and the second power converter 101b using the half bridge type cell 103 are applied and when the capacitor 130 of the first power converter 101a is charged to a predetermined voltage and the capacitor 130 of the second power converter 101b is at a zero voltage in a state in which the switch CB1 and the switch CB2 on the DC side are in a disconnected state for maintenance or the like, there is concern that an excessive current flows due to a difference between the DC voltages at both ends and the device fails if the switch CB1 and the switch CB2 are switched to the connected state. Here, by switching the switch CB1 and the switch CB2 to the connected state after the capacitor 130 of the first power converter 101a is charged to the predetermined voltage, the second power converter 101b is initially charged from the AC system ACS1, and the capacitor 130 of the second power converter 101b is charged to the predetermined voltage, it is possible to curb an excessive current from flowing to the second power converter 101b. The same applies when the switch CB1 and the switch CB2 are switched to the connected state from a state in which the capacitor 130 of the second power converter 101b is charged to the predetermined voltage and the capacitor 130 of the first power converter 101a is at the zero voltage.

### (Fourth embodiment)

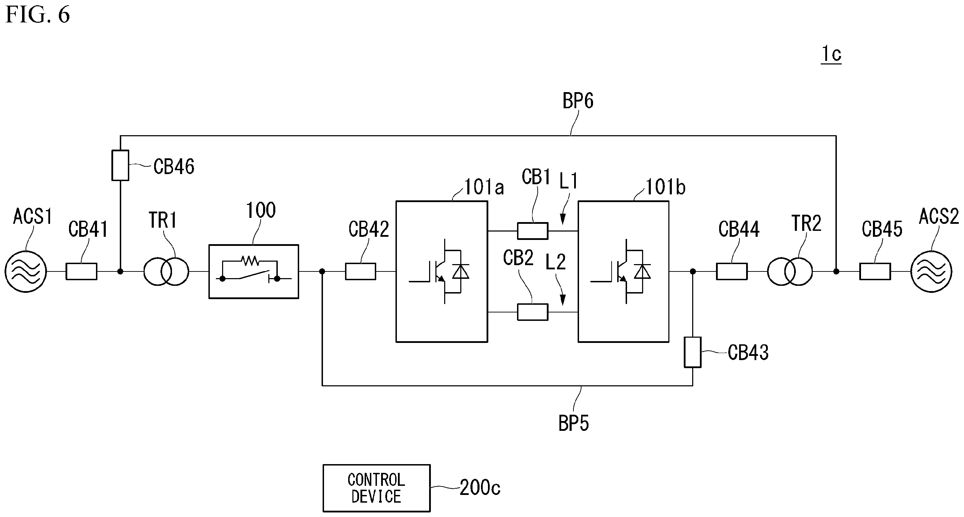

Next, a power conversion device of fourth embodiment will be described with reference to FIG. 6. The fourth embodiment is different from the third embodiment in a connection aspect between each switch CB and the initial charging device 100. Parts that are the same as those in the third embodiment are denoted with the same reference signs, and a detailed description thereof will be omitted.

FIG. 6 is a configuration diagram showing an overall configuration of a power conversion device 1c. A first power converter 101a and a second power converter 101b included in the power conversion device 1c of the fourth embodiment may be a cell 103 that is a half bridge type cell or may be a cell 103a that is a full bridge type cell.

### [Overall configuration of power conversion device 1c]

As shown in FIG. 6, the power conversion device 1c includes, for example, a first power converter 101a, a second power converter 101b, a switch CB1, a switch CB2, a transformer TR1, and a transformer TR2, an initial charging device 100, a switch CB41, a switch CB42, a switch CB43, a switch CB44, a switch CB45, a switch CB46, and a control device 200c.

The switch CB41, the transformer TR1, the initial charging device 100, the switch CB42, and the first power converter 101a are connected in series in this order from an AC system ACS1. The switch CB45, the transformer TR2, the switch CB44, and the second power converter 101b are connected in series in this order from an AC system ACS2.

A bypass line BP5 is connected between the initial charging device 100 and the switch CB42 and between the switch CB44 and the second power converter 101b. The switch CB43 is provided in the bypass line BP5. A bypass line BP6 is connected between the switch CB41 and the initial charging device 100 and between the switch CB45 and the switch CB44. The switch CB46 is provided in the bypass line BP6.

### [Switching of switch CB for initial charging of power conversion device 1c]

States of the switches CB before initial charge is performed are, for example, all in a disconnected state.

(5-1) The control device 200c causes the switch CB45, the switch CB46, and the switch CB43 to enter a connected state. Further, an operator switches the disconnector 120 of the initial charging device 100 to a connected state after a predetermined time has elapsed. Thereby, the capacitor 130 included in the second power converter 101b is charged to a predetermined voltage with an AC current from the AC system ACS2. The predetermined voltage is lower than the rated voltage of the capacitor 130 as described above.

(5-2) The control device 200c causes the switch CB46 and the switch CB43 to enter a disconnected state.

(5-3) The operator causes the disconnector 120 of the initial charging device 100 to enter a disconnected state so that the disconnector 120 becomes a resistor.

(5-6) The control device 200c causes the switch CB41 and the switch CB42 to enter a connected state. Further, the operator switches the disconnector 120 of the initial charging device 100 to the connected state after a predetermined time has elapsed. Thereby, the capacitor 130 included in the first power converter 101a is charged to a predetermined voltage with the AC current from the AC system ACS1.

(5-7) The control device 200c causes the switch CB1 and the switch CB2 to enter the connected state.

(5-8) The control device 200c causes the switch CB44 to enter the connected state.

(5-9) The control device 200c starts switching of the first power converter 101a and the second power converter 101b. Thereby, the capacitor 130 included in the first power converter 101a is charged to an operation target voltage with an AC current of the AC system ACS1. The capacitor 130 included in the second power converter 101b is charged to the operation target voltage by an AC current of the AC system ACS2.

According to the power conversion device 1c of the fourth embodiment described above, it is possible to curb an installation area of the power conversion device 1, as in the first embodiment. Further, the power conversion device 1c of fourth embodiment can switch the power converter 101 that is connected to the initial charging device 100. With this configuration, it is possible to eliminate restrictions caused by the initial charging of the power conversion device 1c. The restrictions include, for example, restrictions such as a configuration of the cells included in the first power converter 101a and the second power converter 101b, states of the AC system ACS1 and the AC system ACS2, and an order of the power converters 101 that are initially charged.

Further, when the switch CB41, the switch CB42, and the switch CB43 are caused to enter the connected state and the switch CB44, the switch CB45, and the switch CB46 are caused to enter the disconnected state, the first power converter 101a and the second power converter 101b can be simultaneously initially charged with the AC current supplied from the AC system ACS1 via the initial charging device 100. Further, when the switch CB42, the switch CB43, the switch CB45, and the switch CB46 are caused to enter a connected state and the switch CB41 and the switch CB44 are caused to enter a disconnected state, the first power converter 101a and the second power converter 101b can be simultaneously initially charged with the AC current supplied from the AC system ACS2 via the initial charging device 100. In this case, the initial charging device 100 needs a power amount rating necessary for initial charging of the two power converters 101, but it is possible to achieve a smaller installation area than when the individual initial charging devices 100 are provided.

### (Fifth embodiment)

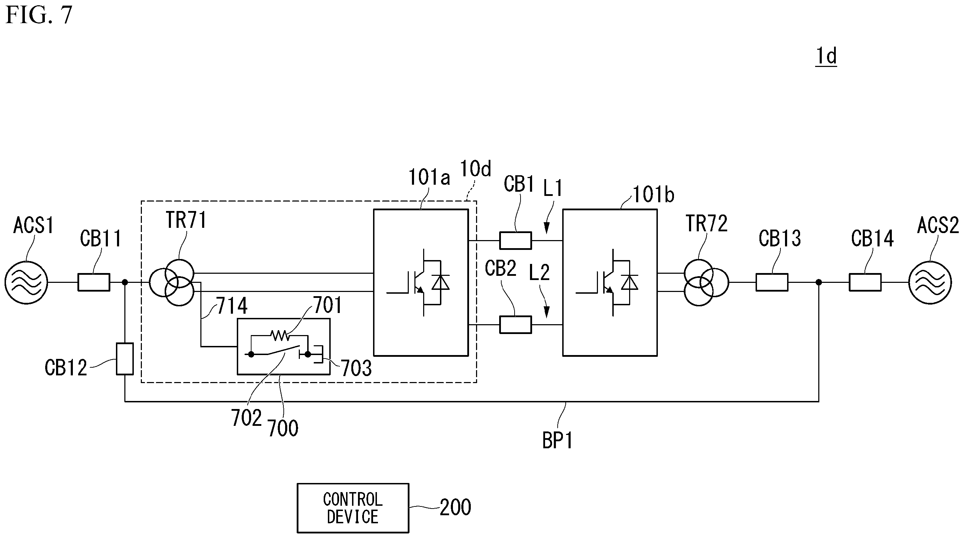

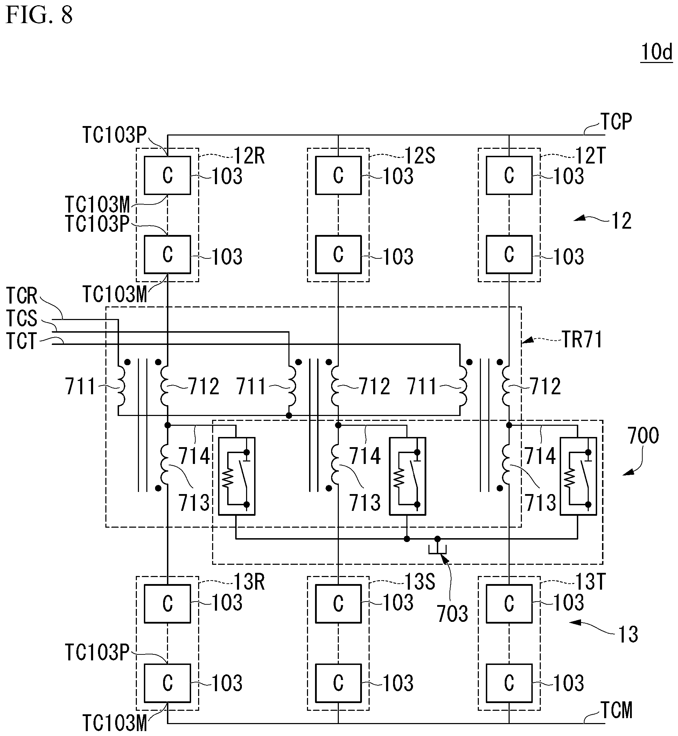

Next, a power conversion device according to a fifth embodiment will be described with reference to FIGS. 7 and 8

FIG. 7 is a configuration diagram showing an overall configuration of a power conversion device 1d. The fifth embodiment is different from the first embodiment in that the initial charging device further includes a 3-phase termination 703 and the transformer TR is a 3-winding transformer.

The initial charging device 700 includes, for example, a resistor 701, a disconnector 702, and the 3-phase termination 703. The resistor 701 and the disconnector 702 are connected in parallel, and the resistor 701 and the disconnector 702 connected in parallel and the 3-phase termination 703 are connected in series. This initial charging device 700 is connected to a neutral wire of a 3-winding transformer TR71. The 3-phase termination 703 connects a neutral wire of an R phase, a neutral wire of an S phase, and a neutral wire of a T phase on a secondary side of the 3-winding transformer TR71.

FIG. 8 is a diagram showing a circuit configuration of an MMC 10d including the power converter 101a. Since an operation in the disconnected state and the connected state of the switch CB according to the fifth embodiment is the same as the operation in the first embodiment, a description thereof will be omitted.

The 3-winding transformer TR71 is provided, for example, in each of the R phase, S phase, and T phase of an alternating current, and connects a positive side arm 12 and a negative side arm 13 of each phase to an AC system. The 3-winding transformer TR71 includes, for example, a primary winding 711, a secondary winding 712, a tertiary winding 713, an iron core, and a neutral wire 714. The respective windings 711 to 713 are wound around the same iron core. A winding direction of each of the windings 711 to 713 is indicated by a black point in FIG. 8. A side with a black point is also referred to as a positive polarity side, and a side without a black point is also referred to as a negative polarity side.

The primary winding 711 has one end connected to the AC system, and the other end connected to a primary winding of an R-phase, a primary winding of an S-phase, and a primary winding of a T-phase. In FIG. 8, the primary winding is Y-connected, but may be Δ (delta) connected. The secondary winding 712 and the tertiary winding 713 are insulated from the primary winding 711 connected to the AC system. The secondary winding 712 and the tertiary winding 713 have the same number of turns. The secondary winding 712 and the tertiary winding 713 are connected to each other on the negative polarity side and have opposite polarities. Therefore, since DC magnetic fluxes are generated in opposite directions in the iron core, DC magnetomotive forces are canceled out in the same phase. A positive polarity side of the secondary winding 712 is connected to the positive side arm 12. A positive polarity side of the tertiary winding 713 is connected to the negative side arm 13. Further, the neutral wire 714 that has connected the negative polarity sides of the secondary winding 712 and the tertiary winding 713 to each other via the initial charging device 700 is provided.

According to the power conversion device 1d of the fifth embodiment described above, the initial charging device 700 is provided in the neutral wire 714 on the secondary and tertiary winding sides of the 3-winding transformer TR71, such that an excitation current for exciting the iron core of the 3-winding transformer TR71 does not flow in the initial charging device 700. Therefore, it is possible to reduce a size of the initial charging device 700. Further, it is possible to initially charge the power converter 101a and the power converter 101b in a state in which the initial charging device 700 is shared. That is, according to the power conversion device 1d of the fifth embodiment, an installation area of the power conversion device 1d can be curbed, as in the first embodiment.

### (Sixth embodiment)

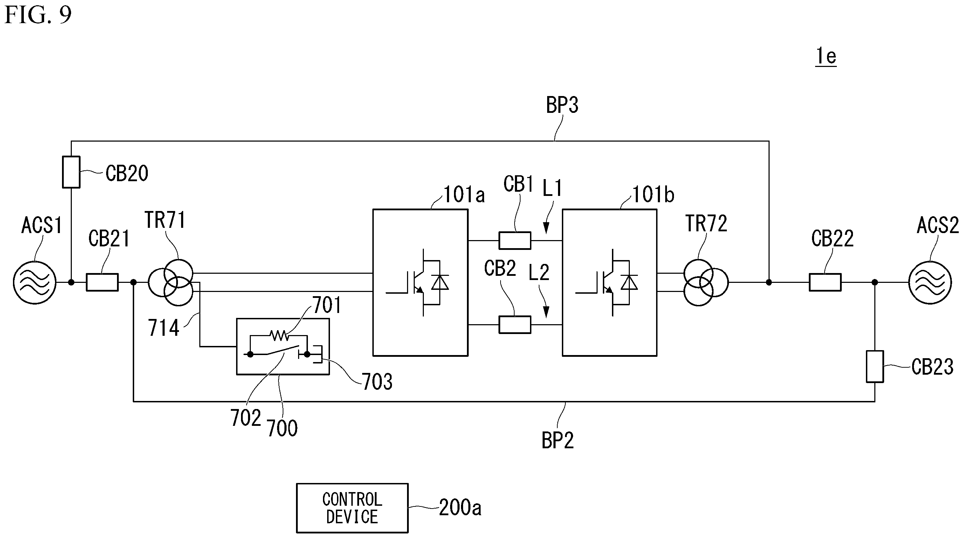

Next, a power conversion device 1e of a sixth embodiment will be described with reference to FIG. 9.

FIG. 9 is a configuration diagram showing an overall configuration of the power conversion device 1e. The power conversion device 1e is different from the second embodiment described above in that the transformer TR is a 3-winding transformer. Since an operation in the disconnected state and the connected state of the switch CB according to the sixth embodiment is the same as the operation in the second embodiment, a description thereof will be omitted.

According to the power conversion device 1e of the sixth embodiment described above, it is possible to curb an installation area of the power conversion device 1e, as in the fifth embodiment.

### (Seventh embodiment)

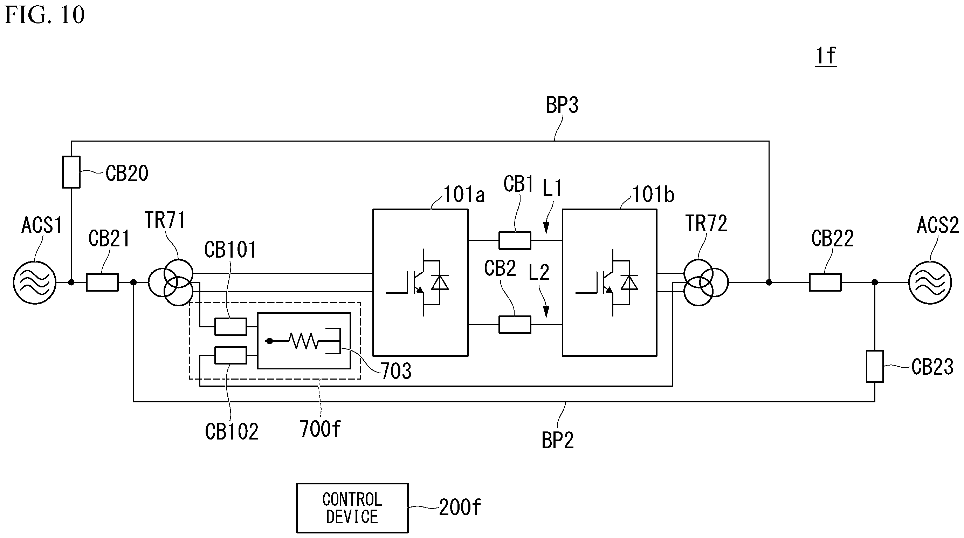

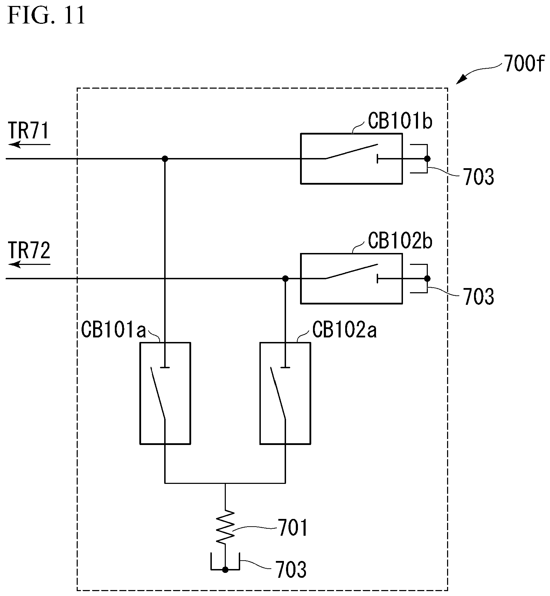

Next, a power conversion device of a seventh embodiment will be described with reference to FIGS. 10 and 11.

FIG. 10 is a configuration diagram showing an overall configuration of a power conversion device 1f. As shown in FIG. 10, the power conversion device 1f is different from those of the fifth and sixth embodiments in that the neutral wire of the 3-winding transformer TR71 and the neutral wire of a 3-winding transformer TR72 are connected to the initial charging device 700 via a switch CB101 and a switch CB102.

The power conversion device 1f includes, for example, a switch CB101, a switch CB102, and a control device 200f. The switch CB101 includes a switch CB101a and a switch CB101b. The switch CB102 includes a switch CB102a and a switch CB102b. FIG. 11 is a configuration diagram showing a connection portion 700f between the neutral wire of the 3-winding transformer TR71 and the 3-winding transformer TR72 and the initial charging device 700.

The connection portion 700f includes a resistor 701, a disconnector CB101a, a switch CB101b, a switch CB102a, a switch CB102b, and a 3-phase termination 703. The resistor 701 and the switch CB101a are connected in series. Further, the resistor 701 and the switch CB102a are connected in series. The switch CB101a or the switch CB102a enters a connected state at the time of start of initial charging. Further, the switch CB101b or the switch CB102b enters a disconnected state at the time of the start of initial charging.

The switch CB101a or the switch CB102a enters a disconnected state by the control device 200f when a certain amount of charge is stored in a capacitor of the power conversion device. The switch CB101b or the switch CB102b enters a connected state by the control device 200f when a certain amount of charge is stored in the capacitor of the power conversion device. That is, the initial charging device 700f can change a state connected to the 3-phase termination 703 via the resistor 701 and a state connected to the 3-phase termination 703 not via the resistor 701.

### [Switching of initial charging of switch CB of power conversion device If]

States of the switches CB before initial charging is performed are, for example, all in a disconnected state.

(6-1) The control device 200f causes the switch CB20 and the switch CB102a to enter a connected state. Further, the power conversion device 1f causes the switch CB102b shown in FIG. 11 to enter a disconnected state so that the initial charging device 700 becomes a resistor.

(6-2) When the capacitor 130 included in the power converter 101b is charged up to a predetermined voltage, the control device 200f causes the switch CB102b shown in FIG. 11 to enter a connected state and the switch CB102a to enter a disconnected state. Thereby, the capacitor 130 included in the power converter 101b is charged to a predetermined voltage with the AC current from the AC system ACS1. The predetermined voltage is lower than the rated voltage of the capacitor 130, as described above.

(6-3) The control device 200f causes the switch CB20 to enter a disconnected state.

(6-4) The control device 200f causes the switch CB101a to enter a connected state and the switch CB101b to enter a disconnected state so that the initial charging device 700 becomes a resistor.

(6-5) The control device 200f switches the switch CB21 to the connected state.

(6-6) When the capacitor 130 included in the power converter 101a is charged to a predetermined voltage, the control device 200f causes the switch CB101b shown in FIG. 11 to enter the connected state and the switch CB101a to enter the disconnected state. Thereby, the capacitor 130 included in the power converter 101a is charged to a predetermined voltage with an AC current from the AC system ACS 1.

(6-7) The control device 200f causes the switch CB 1 and the switch CB2 to enter the connected state. The switch CB1 and the switch CB2 may be caused to enter the connected state before initial charging.

(6-8) The control device 200f causes the switch CB22 to enter the connected state.

(6-9) The control device 200f starts switching of the power converter 101a and the power converter 101b, and charges the capacitor 130 included in each of the power converter 101a and the power converter 101b to a target value at the time of operation.

(6-10) The control device 200f starts a normal operation for exchanging power in an order from the AC system ACS1 to the power converter 101a, the power converter 101b, and the AC system ACS2.

The power conversion device 1f may exchange power in an order from the AC system ACS1 to the power converter 101b, the power converter 101a, and the AC system ACS2 by switching between the disconnected state and the connected state of the switch CB. In this case, after the initial charging of the power converter 101a and the power converter 101b has been completed, the power conversion device 1f may cause the switch CB20 and the switch CB23 to enter the connected state and the switch CB21 and the switch CB22 to enter the disconnected state.

According to the power conversion device 1f of the seventh embodiment described above, it is possible to curb an installation area of the power conversion device If, as in the fifth and sixth embodiments. Further, according to the power conversion device 1f of the seventh embodiment, it is possible to eliminate restrictions due to initial charging of the power conversion device If, as in the fourth embodiment.

According to at least one of the embodiments described above, a power conversion device includes a first power converter connected to a first AC system and configured to convert AC to DC, and DC to AC; a second power converter connected to a second AC system and configured to convert AC to DC, and DC to AC, a DC side of the second power converter being connected to the first power converter; one initial charging device including a resistor and a disconnector and connected to at least one of the plurality of power converters; and a charging assistance mechanism including one or more bypass lines and an arrangement of switches, the charging assistance mechanism being able to selectively connect one of the first AC system and the second AC system to the initial charging device, thereby curbing an installation area of the power conversion device.

Although several embodiments of the present invention have been described, the scope of the invention is only limited by the appended claims.

### [Reference Signs List]

1, 1a, 1b, 1c, 1d, 1e, 1f Power conversion device
ACS1, ACS2 AC system
100,700 Initial charging device
110,701 Resistor
120,702 Disconnector
101a, 101b, 102a, 102b power converter
103, 103a cell
200, 200a, 200b, 200c, 200d, 200f control device
BP1, BP2, BP3, BP4, BP5 bypass line
CB1, CB2, CB11 to CB14, CB20 to CB23, CB31 to CB35, CB41 to CB45 switch
TR1, TR2, TR71, TR72 transformer

## Claims

1. A power conversion device comprising:
a first power converter (101a) connected to a first AC system (ACS1) and configured to convert AC to DC, and DC to AC;
a second power converter (101b) connected to a second AC system (ACS2) and configured to convert AC to DC, and DC to AC, a DC side of the second power converter (101b) being connected to the first power converter (101a); and
one initial charging device (100, 700) including a resistor (110, 701) and a disconnector (120, 702) and connected to at least one of a plurality of the power converters;
**characterized by**:
a charging assistance mechanism including one or more bypass lines (BP) and an arrangement of switches (CB), the charging assistance mechanism being able to selectively connect one of the first AC system (ACS1) and the second AC system (101b) to the initial charging device (100, 700).

2. The power conversion device according to claim 1,
wherein the charging assistance mechanism includes a first switch (CB11), a second switch (CB14), a third switch (CB13), and a fourth switch (CB12),
the first switch (CB11), the initial charging device (100), and the first power converter (101a) are connected in series in this order from the first AC system (ACS1),
the second switch (CB14), the third switch (CB13), and the second power converter (101b) are connected in series in this order from the second AC system (ACS2), and
the charging assistance mechanism further includes the bypass line (BP1) configured to connect a location between the first switch (CB11) and the initial charging device (100) to a location between the second switch (CB14) and the third switch (CB13), the fourth switch (CB12) being provided in the bypass line (BP1).

3. The power conversion device according to claim 2, wherein the charging assistance mechanism is able to selectively connect the second AC system (ACS2) to the initial charging device (100) by causing the second switch (CB14) and the fourth switch (CB12) to enter a connected state and the first switch (CB11) and the third switch (CB13) to enter a disconnected state.

4. The power conversion device according to claim 2, wherein the charging assistance mechanism is able to selectively connect the first AC system (ACS1) to the initial charging device (100) by causing the first switch (CB11) to enter a connected state and the fourth switch (CB12), the second switch (CB14), and the third switch (CB13) to enter a disconnected state.

5. The power conversion device according to claim 1,
wherein the charging assistance mechanism includes a first switch (CB21), a second switch (CB22), a third switch (CB20), and a fourth switch (CB23),
the first switch (CB21), the initial charging device (100), and the first power converter (101a) are connected in series in this order from the first AC system (ACS1),
the second switch (CB22) and the second power converter (101b) are connected in series in this order from the second AC system (ACS2),
a first bypass line (BP3) and a second bypass line (BP2) are included in the bypass line, and
the charging assistance mechanism further includes
the first bypass line (BP3) configured to connect a location between the first AC system (ACS1) and the first switch (CB21) and a location between the second switch (CB22) and the second power converter (101b), the third switch (CB20) being provided in the first bypass line (BP3), and
the second bypass line (BP2) configured to connect a location between the second AC system (ACS2) and the second switch (CB22) and a location between the first switch (CB21) and the initial charging device (100), the fourth switch (CB23) being provided in the second bypass line (BP2).

6. The power conversion device according to claim 5, wherein the charging assistance mechanism is able to selectively connect the second AC system (ACS2) to the initial charging device (100) by causing the first switch (CB21), the second switch (CB22), and the third switch (CB20) to enter a disconnected state and the fourth switch (CB23) to enter a connected state.

7. The power conversion device according to claim 5, wherein the charging assistance mechanism is able to selectively connect the first AC system (ACS1) to the initial charging device (100) by causing the second switch (CB22), the third switch (CB20), and the fourth switch (CB23) to enter a disconnected state and the first switch (CB21) to enter a connected state.

8. The power conversion device according to claim 1,
wherein the charging assistance mechanism includes a first switch (CB31), a second switch (CB32), a third switch (CB35), and a fourth switch (CB34),
the first switch (CB31), the second switch (CB32), and the first power converter (101a) are connected in series in this order from the first AC system (ACS1),
the third switch (CB35), the fourth switch (CB34), and the second power converter (101b) are connected in series in this order from the second AC system (ACS2), and
the charging assistance mechanism further includes the bypass line (BP4) configured to connect a location between the first switch (CB31) and the second switch (CB32) to a location between the third switch (CB35) and the fourth switch (CB34), the initial charging device (100) being provided in the bypass line (BP4).

9. The power conversion device according to claim 8, wherein the charging assistance mechanism is able to selectively connect the second AC system (ACS2) to the initial charging device (100) by causing the first switch (CB31) and the fourth switch (CB34) to enter a disconnected state and the second switch (CB32) and the third switch (CB35) to enter a connected state.

10. The power conversion device according to claim 8, wherein the charging assistance mechanism is able to selectively connect the first AC system (ACS1) to the initial charging device (100) by causing the second switch (CB32) and the third switch (CB35) to enter a disconnected state and the first switch (CB31) and the fourth switch (CB34) to enter a connected state.

11. The power conversion device according to claim 1,
wherein the charging assistance mechanism includes a first switch (CB41), a second switch (CB42), a third switch (CB45), a fourth switch (CB44), a fifth switch (CB46), and a sixth switch (CB43),
the first switch (CB41), the initial charging device (100), the second switch (CB42), and the first power converter (101a) are connected in series in this order from the first AC system (ACS1),
the third switch (CB45), the fourth switch (CB46), and the second power converter (101b) are connected in series in this order from the second AC system (ACS2),
a first bypass line (BP6) and a second bypass line (BP5) are included in the bypass line, and
the charging assistance mechanism further includes
the first bypass line (BP6) configured to connect a location between the first switch (CB41) and the initial charging device (100) to a location between the third switch (CB45) and the fourth switch (CB44), the fifth switch (CB46) being provided in the first bypass line (BP61), and
the second bypass line (BP5) configured to connect a location between the initial charging device (100) and the second switch (CB42) to a location between the fourth switch (CB44) and the second power converter (101b), the sixth switch (CB43) being provided in the second bypass line (BP5).

12. The power conversion device according to claim 11, wherein the charging assistance mechanism is able to selectively connect the second AC system (ACS2) to the initial charging device (100) by causing the first switch (CB41), the fourth switch (CB44), and the sixth switch (CB43) to enter a disconnected state and the second switch (CB42), the third switch (CB45), and the fifth switch (CB46) to enter a connected state or by causing the first switch (CB41), the second switch (CB42), and the fourth switch (CB44) to enter a disconnected state and the third switch (CB45), the fifth switch (CB46), and the sixth switch (CB43) to enter a connected state.

13. The power conversion device according to claim 11, wherein the charging assistance mechanism is able to selectively connect the first AC system (ACS1) to the initial charging device (100) by causing the third switch (CB45), the fourth switch (CB44), the fifth switch (CB46), and the sixth switch (CB43) to enter a disconnected state and the first switch (CB41) and the second switch (CB42) to enter a connected state or by causing the second switch (CB42), the third switch (CB45), the fourth switch (CB44), and the fifth switch (CB46) to enter a disconnected state and the first switch (CB41) and the sixth switch (CB43) to enter a connected state.

14. The power conversion device according to claim 11,
wherein the charging assistance mechanism is configured to cause the third switch (CB45), the fourth switch (CB44), and the fifth switch (CB46) to enter a disconnected state, and the first switch (CB41), the second switch (CB42), and the sixth switch (CB43) to enter a connected state to selectively connect the first AC system (ACS1) to the initial charging device (100), and
the first power converter (101a) and the second power converter (101b) are simultaneously initially charged with an AC current supplied from the first AC system (ACS1).

15. The power conversion device according to claim 11,
wherein the charging assistance mechanism is configured to cause the first switch (CB41) and the fourth switch (CB44) to enter a disconnected state, and the second switch (CB42), the third switch (CB45), the fifth switch (CB46), and the sixth switch (CB43) to enter a connected state to selectively connect the second AC system (ACS2) to the initial charging device (100), and
the first power converter (101a) and the second power converter (101b) are simultaneously initially charged with an AC current supplied from the second AC system (ACS2).

16. The power conversion device according to any one of claims 8 to 15,
wherein the plurality of power converters are modular multilevel converters (MMCs) each including a half bridge type cell (103) or a full bridge type cell (103a), and
the charging assistance mechanism is configured to select a connection between the initial charging device (100) and the first power converter (101a) or the second power converter (101b) by switching between a disconnected state and a connected state of the switch, and initially charge each of the plurality of power converters.

17. The power conversion device according to claim 16, wherein the DC sides of the power converters (101a, 101b) that have completed initial charging are connected.

18. The power conversion device according to any one of claims 1 to 17, wherein the power conversion device has a 3-winding transformer (TR71).

19. The power conversion device according to claim 18,
wherein each of the plurality of power conversion devices includes the 3-winding transformer (TR71), and
the initial charging device (700) is connected to a neutral wire (714) of the 3-winding transformer (TR71).

## Patentansprüche

1. Leistungsumwandlungsvorrichtung, die umfasst:
einen ersten Leistungswandler (101a), der mit einem ersten Wechselstromsystem (ACS1) verbunden ist und dazu ausgestaltet ist, Wechselstrom in Gleichstrom und Gleichstrom in Wechselstrom umzuwandeln;
einen zweiten Leistungswandler (101b), der mit einem zweiten Wechselstromsystem (ACS2) verbunden ist und dazu ausgestaltet ist, Wechselstrom in Gleichstrom und Gleichstrom in Wechselstrom umzuwandeln, wobei eine Gleichstromseite des zweiten Leistungswandlers (101b) mit dem ersten Leistungswandler (101a) verbunden ist; und
eine Anfangsladevorrichtung (100, 700), die einen Widerstand (110, 701) und einen Trennschalter (120, 702) umfasst und mit mindestens einem von mehreren der Leistungswandler verbunden ist,
**gekennzeichnet durch**:
einen Ladehilfemechanismus, der eine oder mehrere Umgehungsleitungen (BP) und eine Anordnung von Schaltern (CB) umfasst, wobei der Ladehilfemechanismus in der Lage ist, eines von dem ersten Wechselstromsystem (ACS1) und dem zweiten Wechselstromsystem (101b) selektiv mit der Anfangsladevorrichtung (100, 700) zu verbinden.

2. Leistungsumwandlungsvorrichtung nach Anspruch 1,
wobei der Ladehilfemechanismus einen ersten Schalter (CB11), einen zweiten Schalter (CB14), einen dritten Schalter (CB13) und einen vierten Schalter (CB12) umfasst,
der erste Schalter (CB11), die Anfangsladevorrichtung (100) und der erste Leistungswandler (101a) in dieser Reihenfolge von dem ersten Wechselstromsystem (ACS1) in Reihe geschaltet sind,
der zweite Schalter (CB14), der dritte Schalter (CB13) und der zweite Leistungswandler (101b) in dieser Reihenfolge von dem zweiten Wechselstromsystem (ACS2) in Reihe geschaltet sind, und
der Ladehilfemechanismus ferner die Umgehungsleitung (BP1) umfasst, die dazu ausgestaltet ist, einen Ort zwischen dem ersten Schalter (CB11) und der Anfangsladevorrichtung (100) mit einem Ort zwischen dem zweiten Schalter (CB14) und dem dritten Schalter (CB13) zu verbinden, wobei der vierte Schalter (CB12) in der Umgehungsleitung (BP1) bereitgestellt ist.

3. Leistungsumwandlungsvorrichtung nach Anspruch 2, wobei der Ladehilfemechanismus in der Lage ist, das zweite Wechselstromsystem (ACS2) selektiv mit der Anfangsladevorrichtung (100) zu verbinden, indem er bewirkt, dass der zweite Schalter (CB14) und der vierte Schalter (CB12) in einen verbundenen Zustand eintreten und der erste Schalter (CB11) und der dritte Schalter (CB13) in einen getrennten Zustand eintreten.

4. Leistungsumwandlungsvorrichtung nach Anspruch 2, wobei der Ladehilfemechanismus in der Lage ist, das erste Wechselstromsystem (ACS1) selektiv mit der Anfangsladevorrichtung (100) zu verbinden, indem er bewirkt, dass der erste Schalter (CB11) in einen verbundenen Zustand eintritt und der vierte Schalter (CB12), der zweite Schalter (CB14) und der dritte Schalter (CB13) in einen getrennten Zustand eintreten.

5. Leistungsumwandlungsvorrichtung nach Anspruch 1,
wobei der Ladehilfemechanismus einen ersten Schalter (CB21), einen zweiten Schalter (CB22), einen dritten Schalter (CB20) und einen vierten Schalter (CB23) umfasst,
der erste Schalter (CB21), die Anfangsladevorrichtung (100) und der erste Leistungswandler (101a) in dieser Reihenfolge von dem ersten Wechselstromsystem (ACS1) in Reihe geschaltet sind,
der zweite Schalter (CB22) und der zweite Leistungswandler (101b) in dieser Reihenfolge von dem zweiten Wechselstromsystem (ACS2) in Reihe geschaltet sind,
eine erste Umgehungsleitung (BP3) und eine zweite Umgehungsleitung (BP2) in der Umgehungsleitung enthalten sind, und
der Ladehilfemechanismus ferner umfasst:
die erste Umgehungsleitung (BP3), die dazu ausgestaltet ist, einen Ort zwischen dem ersten Wechselstromsystem (ACS1) und dem ersten Schalter (CB21) und einen Ort zwischen dem zweiten Schalter (CB22) und dem zweiten Leistungswandler (101b) zu verbinden, wobei der dritte Schalter (CB20) in der ersten Umgehungsleitung (BP3) bereitgestellt ist, und
die zweite Umgehungsleitung (BP2), die dazu ausgestaltet ist, einen Ort zwischen dem zweiten Wechselstromsystem (ACS2) und dem zweiten Schalter (CB22) und einen Ort zwischen dem ersten Schalter (CB21) und der Anfangsladevorrichtung (100) zu verbinden, wobei der vierte Schalter (CB23) in der zweiten Umgehungsleitung (BP2) bereitgestellt ist.

6. Leistungsumwandlungsvorrichtung nach Anspruch 5, wobei der Ladehilfemechanismus in der Lage ist, das zweite Wechselstromsystem (ACS2) selektiv mit der Anfangsladevorrichtung (100) zu verbinden, indem er bewirkt, dass der erste Schalter (CB21), der zweite Schalter (CB22) und der dritte Schalter (CB20) in einen getrennten Zustand eintreten und der vierte Schalter (CB23) in einen verbundenen Zustand eintritt.

7. Leistungsumwandlungsvorrichtung nach Anspruch 5, wobei der Ladehilfemechanismus in der Lage ist, das erste Wechselstromsystem (ACS1) selektiv mit der Anfangsladevorrichtung (100) zu verbinden, indem er bewirkt, dass der zweite Schalter (CB22), der dritte Schalter (CB20) und der vierte Schalter (CB23) in einen getrennten Zustand eintreten und der erste Schalter (CB21) in einen verbundenen Zustand eintritt.

8. Leistungsumwandlungsvorrichtung nach Anspruch 1,
wobei der Ladehilfemechanismus einen ersten Schalter (CB31), einen zweiten Schalter (CB32), einen dritten Schalter (CB35) und einen vierten Schalter (CB34) umfasst,
der erste Schalter (CB31), der zweite Schalter (CB32) und der erste Leistungswandler (101a) in dieser Reihenfolge von dem ersten Wechselstromsystem (ACS1) in Reihe geschaltet sind,
der dritte Schalter (CB35), der vierte Schalter (CB34) und der zweite Leistungswandler (101b) in dieser Reihenfolge von dem zweiten Wechselstromsystem (ACS2) in Reihe geschaltet sind, und der Ladehilfemechanismus ferner die Umgehungsleitung (BP4) umfasst, die dazu ausgestaltet ist, einen Ort zwischen dem ersten Schalter (CB31) und dem zweiten Schalter (CB32) mit einem Ort zwischen dem dritten Schalter (CB35) und dem vierten Schalter (CB34) zu verbinden, wobei die Anfangsladevorrichtung (100) in der Umgehungsleitung (BP4) bereitgestellt ist.

9. Leistungsumwandlungsvorrichtung nach Anspruch 8, wobei der Ladehilfemechanismus in der Lage ist, das zweite Wechselstromsystem (ACS2) selektiv mit der Anfangsladevorrichtung (100) zu verbinden, indem er bewirkt, dass der erste Schalter (CB31) und der vierte Schalter (CB34) in einen getrennten Zustand eintreten und der zweite Schalter (CB32) und der dritte Schalter (CB35) in einen verbundenen Zustand eintreten.

10. Leistungsumwandlungsvorrichtung nach Anspruch 8, wobei der Ladehilfemechanismus in der Lage ist, das erste Wechselstromsystem (ACS1) selektiv mit der Anfangsladevorrichtung (100) zu verbinden, indem er bewirkt, dass der zweite Schalter (CB32) und der dritte Schalter (CB35) in einen getrennten Zustand eintreten und der erste Schalter (CB31) und der vierte Schalter (CB34) in einen verbundenen Zustand eintreten.

11. Leistungsumwandlungsvorrichtung nach Anspruch 1,
wobei der Ladehilfemechanismus einen ersten Schalter (CB41), einen zweiten Schalter (CB42), einen dritten Schalter (CB45), einen vierten Schalter (CB44), einen fünften Schalter (CB46) und einen sechsten Schalter (CB43) umfasst,
der erste Schalter (CB41), die Anfangsladevorrichtung (100), der zweite Schalter (CB42) und der erste Leistungswandler (101a) in dieser Reihenfolge von dem ersten Wechselstromsystem (ACS1) in Reihe geschaltet sind,
der dritte Schalter (CB45), der vierte Schalter (CB46) und der zweite Leistungswandler (101b) in dieser Reihenfolge von dem zweiten Wechselstromsystem (ACS2) in Reihe geschaltet sind,
eine erste Umgehungsleitung (BP6) und eine zweite Umgehungsleitung (BP5) in der Umgehungsleitung enthalten sind, und
der Ladehilfemechanismus ferner umfasst:
eine erste Umgehungsleitung (BP6), die dazu ausgestaltet ist, einen Ort zwischen dem ersten Schalter (CB41) und der Anfangsladevorrichtung (100) mit einem Ort zwischen dem dritten Schalter (CB45) und dem vierten Schalter (CB44) zu verbinden, wobei der fünfte Schalter (CB46) in der ersten Umgehungsleitung (BP61) bereitgestellt ist, und
die zweite Umgehungsleitung (BP5), die dazu ausgestaltet ist, einen Ort zwischen der Anfangsladevorrichtung (100) und dem zweiten Schalter (CB42) mit einem Ort zwischen dem vierten Schalter (CB44) und dem zweiten Leistungswandler (101b) zu verbinden, wobei der sechste Schalter (C43) in der zweiten Umgehungsleitung (BP5) bereitgestellt ist.

12. Leistungsumwandlungsvorrichtung nach Anspruch 11, wobei der Ladehilfemechanismus in der Lage ist, das zweite Wechselstromsystem (ACS2) selektiv mit der Anfangsladevorrichtung (100) zu verbinden, indem er bewirkt, dass der erste Schalter (CB41), der vierte Schalter (CB44) und der sechste Schalter (CB43) in einen getrennten Zustand eintreten und der zweite Schalter (CB42), der dritte Schalter (CB45) und der fünfte Schalter (CB46) in einen verbundenen Zustand eintreten, oder indem er bewirkt, dass der erste Schalter (CB41), der zweite Schalter (CB42) und der vierte Schalter (CB44) in einen getrennten Zustand eintreten und der dritte Schalter (CB45), der fünfte Schalter (CB46) und der sechste Schalter (CB43) in einen verbundenen Zustand eintreten.

13. Leistungsumwandlungsvorrichtung nach Anspruch 11, wobei der Ladehilfemechanismus in der Lage ist, das erste Wechselstromsystem (ACS1) selektiv mit der Anfangsladevorrichtung (100) zu verbinden, indem er bewirkt, dass der dritte Schalter (CB45), der vierte Schalter (CB44), der fünfte Schalter (CB46) und der sechste Schalter (CB43) in einen getrennten Zustand eintreten und der erste Schalter (CB41) und der zweite Schalter (CB42) in einen verbundenen Zustand eintreten, oder indem er bewirkt, dass der zweite Schalter (CB42), der dritte Schalter (CB45), der vierte Schalter (CB44) und der fünfte Schalter (CB46) in einen getrennten Zustand eintreten und der erste Schalter (CB41) und der sechste Schalter (CB43) in einen verbundenen Zustand eintreten.

14. Leistungsumwandlungsvorrichtung nach Anspruch 11,
wobei der Ladehilfemechanismus dazu ausgestaltet ist, zu bewirken, dass der dritte Schalter (CB45), der vierte Schalter (CB44) und der fünfte Schalter (CB46) in einen getrennten Zustand eintreten und der erste Schalter (CB41), der zweite Schalter (CB42) und der sechste Schalter (CB43) in einen verbundenen Zustand eintreten, um das erste Wechselstromsystem (ACS1) selektiv mit der Anfangsladevorrichtung (100) zu verbinden, und
der erste Leistungswandler (101a) und der zweite Leistungswandler (101b) gleichzeitig anfangs mit einem Wechselstrom geladen werden, der von dem ersten Wechselstromsystem (ACS1) zugeführt wird.

15. Leistungsumwandlungsvorrichtung nach Anspruch 11,
wobei der Ladehilfemechanismus dazu ausgestaltet ist, zu bewirken, dass der erste Schalter (CB41) und der vierte Schalter (CB44) in einen getrennten Zustand eintreten und der zweite Schalter (CB42), der dritte Schalter (CB45), der fünfte Schalter (CB46) und der sechste Schalter (CB43) in einen verbundenen Zustand eintreten, um das zweite Wechselstromsystem (ACS2) selektiv mit der Anfangsladevorrichtung (100) zu verbinden, und
der erste Leistungswandler (101a) und der zweite Leistungswandler (101b) gleichzeitig anfangs mit einem Wechselstrom geladen werden, der von dem zweiten Wechselstromsystem (ACS2) zugeführt wird.

16. Leistungsumwandlungsvorrichtung nach einem der Ansprüche 8 bis 15,
wobei die mehreren Leistungswandler Modular Multilevel Converter (MMC) sind, die jeweils eine Zelle (103) vom Halbbrückentyp oder eine Zelle (103a) vom Vollbrückentyp umfassen, und
der Ladehilfemechanismus dazu ausgestaltet ist, eine Verbindung zwischen der Anfangsladevorrichtung (100) und dem ersten Leistungswandler (101a) oder dem zweiten Leistungswandler (101b) durch Schalten zwischen einem getrennten Zustand und einem verbundenen Zustand des Schalters auszuwählen und jeden der mehreren Leistungswandler anfänglich zu laden.

17. Leistungsumwandlungsvorrichtung nach Anspruch 16, wobei die Gleichstromseiten der Leistungswandler (101a, 101b), die das anfängliche Laden abgeschlossen haben, verbunden sind.

18. Leistungsumwandlungsvorrichtung nach einem der Ansprüche 1 bis 17, wobei die Leistungsumwandlungsvorrichtung einen 3-Wicklungstransformator (TR71) aufweist.

19. Leistungsumwandlungsvorrichtung nach Anspruch 18,
wobei jede von der Vielzahl von Leistungsumwandlungsvorrichtungen den 3-Wicklungstransformator (TR71) umfasst, und
die Anfangsladevorrichtung (700) mit einem Neutraldraht (714) des 3-Wicklungstransformators (TR71) verbunden ist.

## Revendications

1. Dispositif de conversion de puissance comprenant :
un premier convertisseur de puissance (101a) relié à un premier système CA (ACS1) et configuré pour convertir CA en CC, et CC en CA;
un deuxième convertisseur de puissance (101b) relié à un deuxième système CA (ACS2) et configuré pour convertir CA en CC, et CC en CA, un côté CC du deuxième convertisseur de puissance (101b) étant relié au premier convertisseur de puissance (101a) ; et
un dispositif de chargement initial (100, 700) incluant une résistance (110, 701) et un déconnecteur (120, 702) et relié à au moins l'un d'une pluralité des convertisseurs de puissance ;
**caractérisé par** :
un mécanisme d'assistance au chargement incluant une ou plusieurs lignes de dérivation (BP) et un agencement de commutateurs (CB), le mécanisme d'assistance au chargement étant capable de relier sélectivement l'un parmi le premier système CA (ACS1) et le deuxième système CA (101b) au dispositif de chargement initial (100, 700).

2. Dispositif de conversion de puissance selon la revendication 1,
dans lequel le mécanisme d'assistance au chargement inclut un premier commutateur (CB11), un deuxième commutateur (CB14), un troisième commutateur (CB13) et un quatrième commutateur (CB12), le premier commutateur (CB11), le dispositif de chargement initial (100) et le premier convertisseur de puissance (101a) sont reliés en série dans cet ordre depuis le premier système CA (ACS1),
le deuxième commutateur (CB14), le troisième commutateur (CB13) et le deuxième convertisseur de puissance (101b) sont reliés en série dans cet ordre depuis le deuxième système CA (ACS2), et
le mécanisme d'assistance au chargement inclut en outre la ligne de dérivation (BP1) configurée pour relier un emplacement entre le premier commutateur (CB11) et le dispositif de chargement initial (100) à un emplacement entre le deuxième commutateur (CB14) et le troisième commutateur (CB13), le quatrième commutateur (CB12) étant fourni dans la ligne de dérivation (BP1).

3. Dispositif de conversion de puissance selon la revendication 2, dans lequel le mécanisme d'assistance au chargement est capable de relier sélectivement le deuxième système CA (ACS2) au dispositif de chargement initial (100) en amenant le deuxième commutateur (CB14) et le quatrième commutateur (CB12) à entrer dans un état relié et le premier commutateur (CB11) et le troisième commutateur (CB13) à entrer dans un état non relié.

4. Dispositif de conversion de puissance selon la revendication 2, dans lequel le mécanisme d'assistance au chargement est capable de relier sélectivement le premier système CA (ACS1) au dispositif de chargement initial (100) en amenant le premier commutateur (CB11) à entrer dans un état relié et le quatrième commutateur (CB12), le deuxième commutateur (CB14) et le troisième commutateur (CB13) à entrer dans un état non relié.

5. Dispositif de conversion de puissance selon la revendication 1, dans lequel le mécanisme d'assistance au chargement inclut un premier commutateur (CB21), un deuxième commutateur (CB22), un troisième commutateur (CB20) et un quatrième commutateur (CB23),
le premier commutateur (CB21), le dispositif de chargement initial (100) et le premier convertisseur de puissance (101a) sont reliés en série dans cet ordre depuis le premier système CA (ACS1),
le deuxième commutateur (CB22) et le deuxième convertisseur de puissance (101b) sont reliés en série dans cet ordre depuis le deuxième système CA (ACS2),
une première ligne de dérivation (BP3) et une deuxième ligne de dérivation (BP2) sont incluses dans la ligne de dérivation, et
le mécanisme d'assistance au chargement inclut en outre
la première ligne de dérivation (BP3) configurée pour relier un emplacement entre le premier système CA (ACS1) et le premier commutateur (CB21) et un emplacement entre le deuxième commutateur (CB22) et le deuxième convertisseur de puissance (101b), le troisième commutateur (CB20) étant fourni dans la première ligne de dérivation (BP3), et
la deuxième ligne de dérivation (BP2) configurée pour relier un emplacement entre le deuxième système CA (ACS2) et le deuxième commutateur (CB22) et un emplacement entre le premier commutateur (CB21) et le dispositif de chargement initial (100), le quatrième commutateur (CB23) étant fourni dans la deuxième ligne de dérivation (BP2).

6. Dispositif de conversion de puissance selon la revendication 5, dans lequel le mécanisme d'assistance au chargement est capable de relier sélectivement le deuxième système CA (ACS2) au dispositif de chargement initial (100) en amenant le premier commutateur (CB21), le deuxième commutateur (CB22) et le troisième commutateur (CB20) à entrer dans un état non relié et le quatrième commutateur (CB23) à entrer dans un état relié.

7. Dispositif de conversion de puissance selon la revendication 5, dans lequel le mécanisme d'assistance au chargement est capable de relier sélectivement le premier système CA (ACS1) au dispositif de chargement initial (100) en amenant le deuxième commutateur (CB22), le troisième commutateur (CB20) et le quatrième commutateur (CB23) à entrer dans un état non relié et le premier commutateur (CB21) à entrer dans un état relié.

8. Dispositif de conversion de puissance selon la revendication 1,
dans lequel le mécanisme d'assistance au chargement inclut un premier commutateur (CB31), un deuxième commutateur (CB32), un troisième commutateur (CB35) et un quatrième commutateur (CB34),
le premier commutateur (CB31), le deuxième commutateur (CB32) et le premier convertisseur de puissance (101a) sont reliés en série dans cet ordre depuis le premier système CA (ACS1),
le troisième commutateur (CB35), le quatrième commutateur (CB34) et le deuxième convertisseur de puissance (101b) sont reliés en série dans cet ordre depuis le deuxième système CA (ACS2), et
le mécanisme d'assistance au chargement inclut en outre la ligne de dérivation (BP4) configurée pour relier un emplacement entre le premier commutateur (CB31) et le deuxième commutateur (CB32) à un emplacement entre le troisième commutateur (CB35) et le quatrième commutateur (CB34), le dispositif de chargement initial (100) étant fourni dans la ligne de dérivation (BP4).

9. Dispositif de conversion de puissance selon la revendication 8, dans lequel le mécanisme d'assistance au chargement est capable de relier sélectivement le deuxième système CA (ACS2) au dispositif de chargement initial (100) en amenant le premier commutateur (CB31) et le quatrième commutateur (CB34) à entrer dans un état non relié et le deuxième commutateur (CB32) et le troisième commutateur (CB35) à entrer dans un état relié.

10. Dispositif de conversion de puissance selon la revendication 8, dans lequel le mécanisme d'assistance au chargement est capable de relier sélectivement le premier système CA (ACS1) au dispositif de chargement initial (100) en amenant le deuxième commutateur (CB32) et le troisième commutateur (CB35) à entrer dans un état non relié et le premier commutateur (CB31) et le quatrième commutateur (CB34) à entrer dans un état relié.

11. Dispositif de conversion de puissance selon la revendication 1,
dans lequel le mécanisme d'assistance au chargement inclut un premier commutateur (CB41), un deuxième commutateur (CB42), un troisième commutateur (CB45), un quatrième commutateur (CB44), un cinquième commutateur (CB46) et un sixième commutateur (CB43),
le premier commutateur (CB41), le dispositif de chargement initial (100), le deuxième commutateur (CB42) et le premier convertisseur de puissance (101a) sont reliés en série dans cet ordre depuis le premier système CA (ACS1),
le troisième commutateur (CB45), le quatrième commutateur (CB46) et le deuxième convertisseur de puissance (101b) sont reliés en série dans cet ordre depuis le deuxième système CA (ACS2),
une première ligne de dérivation (BP6) et une deuxième ligne de dérivation (BP5) sont incluses dans la ligne de dérivation, et
le mécanisme d'assistance au chargement inclut en outre
la première ligne de dérivation (BP6) configurée pour relier un emplacement entre le premier commutateur (CB41) et le dispositif de chargement initial (100) à un emplacement entre le troisième commutateur (CB45) et le quatrième commutateur (CB44), le cinquième commutateur (CB46) étant fourni dans la première ligne de dérivation (BP61), et
la deuxième ligne de dérivation (BP5) configurée pour relier un emplacement entre le dispositif de chargement initial (100) et le deuxième commutateur (CB42) à un emplacement entre le quatrième commutateur (CB44) et le deuxième convertisseur de puissance (101b), le sixième commutateur (CB43) étant fourni dans la deuxième ligne de dérivation (BP5).

12. Dispositif de conversion de puissance selon la revendication 11, dans lequel le mécanisme d'assistance au chargement est capable de relier sélectivement le deuxième système CA (ACS2) au dispositif de chargement initial (100) en amenant le premier commutateur (CB41), le quatrième commutateur (CB44) et le sixième commutateur (CB43) à entrer dans un état non relié et le deuxième commutateur (CB42), le troisième commutateur (CB45) et le cinquième commutateur (CB46) à entrer dans un état relié ou en amenant le premier commutateur (CB41), le deuxième commutateur (CB42) et le quatrième commutateur (CB44) à entrer dans un état non relié et le troisième commutateur (CB45), le cinquième commutateur (CB46) et le sixième commutateur (CB43) à entrer dans un état relié.

13. Dispositif de conversion de puissance selon la revendication 11, dans lequel le mécanisme d'assistance au chargement est capable de relier sélectivement le premier système CA (ACS1) au dispositif de chargement initial (100) en amenant le troisième commutateur (CB45), le quatrième commutateur (CB44), le cinquième commutateur (CB46) et le sixième commutateur (CB43) à entrer dans un état non relié et le premier commutateur (CB41) et le deuxième commutateur (CB42) à entrer dans un état relié ou en amenant le deuxième commutateur (CB42), le troisième commutateur (CB45), le quatrième commutateur (CB44) et le cinquième commutateur (CB46) à entrer dans un état non relié et le premier commutateur (CB41) et le sixième commutateur (CB43) à entrer dans un état relié.

14. Dispositif de conversion de puissance selon la revendication 11,
dans lequel le mécanisme d'assistance au chargement est configuré pour amener le troisième commutateur (CB45), le quatrième commutateur (CB44), et le cinquième commutateur (CB46) à entrer dans un état non relié et le premier commutateur (CB41), le deuxième commutateur (CB42) et le sixième commutateur (CB43) à entrer dans un état relié pour relier sélectivement le premier système CA (ACS1) au système de chargement initial (100), et
le premier convertisseur de puissance (101a) et le deuxième convertisseur de puissance (101b) sont simultanément chargés initialement avec un courant CA fourni depuis le premier système CA (ACS1).

15. Dispositif de conversion de puissance selon la revendication 11, dans lequel le mécanisme d'assistance au chargement est configuré pour amener le premier commutateur (CB41) et le quatrième commutateur (CB44) à entrer dans un état non relié et le deuxième commutateur (CB42), le troisième commutateur (CB45), le cinquième commutateur (CB46) et le sixième commutateur (CB43) à entrer dans un état relié pour relier sélectivement le deuxième système CA (ACS2) au système de chargement initial (100), et
le premier convertisseur de puissance (101a) et le deuxième convertisseur de puissance (101b) sont simultanément chargés initialement avec un courant CA fourni depuis le deuxième système CA (ACS2).

16. Dispositif de conversion de puissance selon l'une quelconque des revendications 8 à 15,
dans lequel la pluralité de convertisseurs de puissance sont des convertisseurs multiniveaux modulaires (MMC) incluant chacun une cellule de type demi-pont (103) ou une cellule de type pont complet (103a), et
le mécanisme d'assistance au chargement est configuré pour sélectionner une liaison entre le dispositif de chargement initial (100) et le premier convertisseur de puissance (101a) ou le deuxième convertisseur de puissance (101b) en commutant entre un état non lié et un état lié du commutateur, et pour charger initialement chacun de la pluralité de convertisseurs de puissance.

17. Dispositif de conversion de puissance selon la revendication 16, dans lequel les côtés CC des convertisseurs de puissance (101a, 101b) qui ont achevé un chargement initial sont reliés.

18. Dispositif de conversion de puissance selon l'une quelconque des revendications 1 à 17, dans lequel le dispositif de conversion de puissance a un transformateur à 3 enroulements (TR71).

19. Dispositif de conversion de puissance selon la revendication 18,
dans lequel chacun de la pluralité de dispositifs de conversion de puissance inclut le transformateur à 3 enroulements (TR71), et
le dispositif de chargement initial (700) est relié à un filtre neutre (714) du transformateur à 3 enroulements (TR71).
